# EUROPÄISCHE PATENTSCHRIFT

(11) **EP 1 875 096 B1**
(45) Veröffentlichungstag und Bekanntmachung des Hinweises auf die Patenterteilung: **09.12.2009**
(21) Anmeldenummer: 06723432.8
(22) Anmeldetag: 15.03.2006
(51) Int. Cl.: F16D 25/12

(54) **ANTRIEBSEINHEIT FÜR EIN KRAFTFAHRZEUG**
DRIVE UNIT FOR A MOTOR VEHICLE
UNITE D'ENTRAINEMENT POUR UN VEHICULE AUTOMOBILE

(30) Priorität: 27.04.2005 DE 102005020415
(43) Veröffentlichungstag der Anmeldung: 09.01.2008
(73) Patentinhaber: GETRAG Getriebe- und Zahnradfabrik Hermann Hagenmeyer GmbH & Cie KG, 74199 Untergruppenbach (DE)
(72) Erfinder: FRONIUS, Kuno, 74348 Lauffen (DE)
(74) Vertreter: Steil, Christian
(86) Internationale Anmeldenummer: PCT/EP2006/002355
(87) Internationale Veröffentlichungsnummer: WO 2006/114164

(56) Entgegenhaltungen:
- EP-A- 0 450 673
- DE-A1- 2 841 053
- DE-A1- 3 508 375
- US-A- 4 957 195
- US-A- 5 263 906
- PATENT ABSTRACTS OF JAPAN Bd. 010, Nr. 191 (M-495), 4. Juli 1986 (1986-07-04) -& JP 61 036519 A (FUJI TEKKOSHO:KK), 21. Februar 1986 (1986-02-21)

## Beschreibung

Die vorliegende Erfindung betrifft ein Doppelkupplungsgetriebe gemäß dem Oberbegriff des Anspruchs 1, wie es aus der DE 102 03 618 A1 bekannt ist, mit einer Doppelkupplungsanordnung und einem Getriebe, das über eine Wellenanordnung mit der Doppelkupplungsanordnung verbunden ist, wobei radial innerhalb der Doppelkupplungsanordnung und um die wellenanordnung herum eine Fluidversorgungseinrichtung angeordnet ist, um die Doppelkupplungsanordnung mit Fluid zu versorgen, wobei die Wellenanordnung sich in das Getriebe hinein erstreckt und wobei das Getriebe entlang der Wellenanordnung eine Mehrzahl von Getriebebauteilen aufweist, die zum Zwecke der Schmierung mit Fluid versorgt werden.

Aus dem eingangs genannten Dokument ist eine Antriebseinheit mit einer nasslaufenden Doppelkupplungsanordnung bekannt, wobei die zwei Kupplungen radial ineinander verschachtelt sind. Radial innerhalb der zwei Kupplungen ist eine Fluidversorgungseinrichtung in Form einer Drehdurchführungsanordnung vorgesehen, die einen getriebeseitigen Statorabschnitt und wenigstens einen sich mit der Kupplungseinrichtung mitdrehenden Rotorabschnitt aufweist. Über die Drehdurchführungsanordnung werden die zwei Kupplungen mit Fluid versorgt, um die Kupplungen hydraulisch zu betätigen. Ferner wird über die Drehdurchführungsanordnung Kühlöl zugeführt.

Eine weitere Antriebseinheit mit zwei Kupplungen ist aus der DE 28 41 053 C2 bekannt. Hierbei sind die zwei Kupplungen koaxial zu einer Nebenwelle angeordnet und werden von einer Druckversorgungseinrichtung an einem axialen Ende der Nebenwelle aus versorgt. Zu diesem Zweck sind in der Nebenwelle Axialkanäle und zu den jeweiligen Kupplungen hin weisende Ausgangsradialkanäle vorgesehen.

Die Versorgung der Getriebebauteile ist in diesen Druckschriften nicht angesprochen. Die Getriebeschmierung erfolgt bei Antriebseinheiten der genannten Art jedoch generell über komplexe Leitungsführungen im Getriebegehäuse.

Vor diesem Hintergrund ist es die Aufgabe der vorliegenden Erfindung, eine verbesserte Antriebseinheit anzugeben.

Diese Aufgabe wird durch ein Doppelkupplungsgetriebe gemäß Anspruch 1 gelöst, wobei von der Fluidversorgungseinrichtung ein Eingangsradialkanal in das Innere der Wellenanordnung führt, dass sich in dem Inneren der Wellenanordnung ein Axialkanal erstreckt, und dass im Inneren des Getriebes wenigstens ein Ausgangsradialkanal von dem Axialkanal zu den Getriebebauteilen führt, um diese mit Fluid zu versorgen.

Durch die erfindungsgemäßen Maßnahmen wird die Versorgung der Getriebebauteile mit Fluid von der normalerweise ausschließlich der Kupplungsanordnung zugewiesenen Fluidversorgungseinrichtung mitübernommen. Zur Versorgung der Getriebebauteile mit Fluid wird daher kein zusätzlicher axialer Bauraum benötigt. Der bislang ungenutzte Bauraum radial innerhalb der Fluidversorgungseinrichtung kann nun für die Einspeisung von Fluid in das Innere der Wellenanordnung genutzt werden.

Generell kann die Fluidversorgungseinrichtung für die Kupplungsanordnung und das Getriebe das gleiche Fluid verwenden. Es ist jedoch auch denkbar, dass die Fluidversorgungseinrichtung mit zwei unterschiedlichen Arten von Fluid gespeist wird, wobei ein Fluid (bspw. ATF-Öl) der Kupplungsanordnung zugeführt wird, und wobei eine andere Art von Fluid (bspw. Hypoidöl) dem Getriebe zugeführt wird.

Durch die Nutzung der gleichen Fluidversorgungseinrichtung für die Fluidversorgung der Kupplungsanordnung und die Fluidversorgung des Getriebes wird Bauraum eingespart.

Die Aufgabe wird somit vollkommen gelöst.

Von besonderem Vorteil ist es, wenn die Fluidversorgungseinrichtung eine Drehdurchführungseinrichtung aufweist.

Ferner ist es vorteilhaft, wenn der Eingangsradialkanal und der Axialkanal gegenüber der Umgebung abgedichtet sind.

Hierbei kann erreicht werden, dass mit zunehmender Drehzahl eine Art "Pumpeffekt" einsetzt, der durch die Fliehkraft des Fluides erzeugt wird. Das Fluid strömt nämlich über die Ausgangsradialkanäle, angetrieben durch diese Fliehkraft, nach außen, wodurch aufgrund der Abdichtung weiteres Fluid angesaugt wird. Es ist auf diese Weise möglich, innerhalb des Getriebegehäuses einen geschlossenen Fluidkreislauf zu erzeugen.

Gemäß einer weiteren bevorzugten Ausführungsform weist der Eingangsradialkanal eine Mehrzahl von über den Umfang verteilten radialen Bohrungen in der Wellenanordnung auf.

Hierdurch kann auch bei Differenzdrehzahlen eine ständige Fluidzufuhr gewährleistet werden.

In entsprechender Weise ist es vorteilhaft, wenn der Ausgangsradialkanal eine Mehrzahl von über den Umfang verteilten radialen Bohrungen in der Wellenanordnung aufweist.

Insgesamt ist es erfindungsgemäß vorgesehen, wenn die Antriebseinheit ein Doppelkupplungsgetriebe ist, wobei die Kupplungsanordnung eine Doppelkupplungsanordnung ist und wobei die Wellenanordnung eine Innenwelle und eine Hohlwelle aufweist.

Hierbei ist es ferner vorteilhaft, wenn der Axialkanal in der Innenwelle ausgebildet ist.

Hierdurch ist es möglich, Getriebebauteile über die gesamte axiale Länge des Getriebes zu versorgen, da die Innenwelle sich bei Doppelkupplungsgetrieben generell über die gesamte axiale Länge des Getriebes erstreckt.

Alternativ ist es auch denkbar, als Axialkanal den Zwischenraum zwischen der Innenwelle und der Hohlwelle zu nutzen. In diesem Fall ist eine Versorgung der um die Hohlwelle herum angeordneten Getriebebauteile auf einfache Weise möglich. Ferner ist keine zusätzliche Abdichtung notwendig.

Gegebenenfalls kann der so gebildete Axialkanal dann in einen Axialkanal in der Innenwelle übergehen, und zwar in dem Bereich, bei dem die Innenwelle aus der Hohlwelle heraus mündet.

Bei dieser Alternative ist es auch möglich, jene Getriebebauteile erfindungsgemäß zu versorgen, die in dem Bereich der Innenwelle angeordnet sind, der nicht von der Hohlwelle umschlossen ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Antriebseinheit gemäß einer ersten Ausführungsform der vorliegenden Erfindung;
- Fig. 2: eine schematische Längsschnittansicht durch eine Fluidversorgungseinrichtung für eine erfindungsgemäße Antriebseinheit;
- Fig. 3: eine Schnittansicht entlang der Linie III-III in Fig. 2 in einer abgewickelten Darstellung; und
- Fig. 4: eine axiale Ansicht auf eine Fluidversorgungseinrichtung gemäß einer weiteren alternativen Ausführungsform einer erfindungsgemäßen Antriebseinheit.

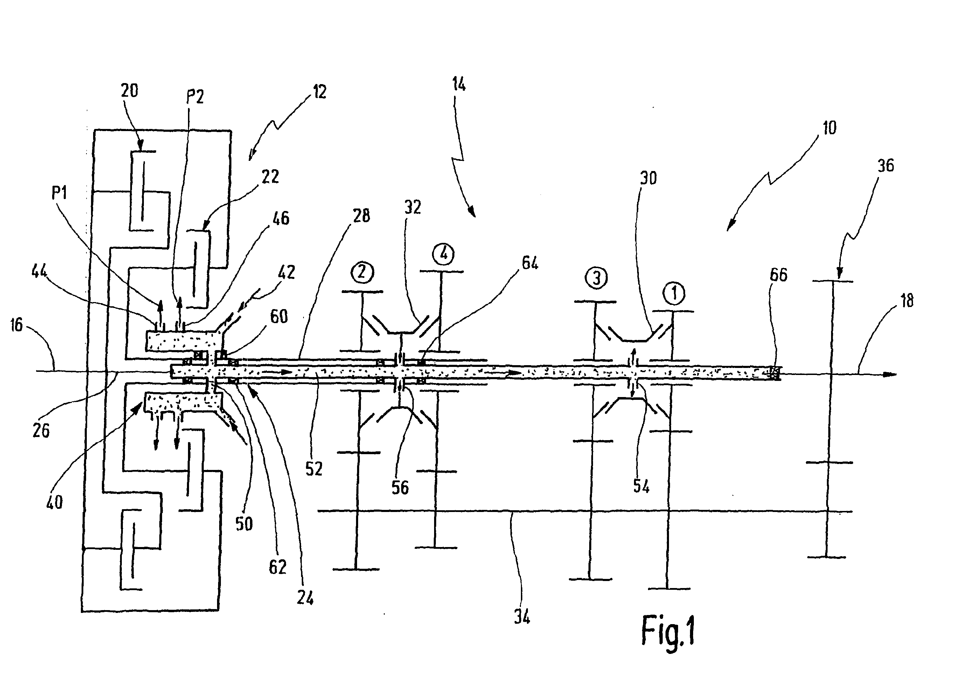

In Fig. 1 ist eine erste Ausführungsform einer erfindungsgemäßen Antriebseinheit für ein Kraftfahrzeug generell mit 10 bezeichnet.

Die Antriebseinheit 10 weist eine Doppelkupplungsanordnung 12 und ein Getriebe 14 in Form eines Stufenwechselgetriebes auf.

Ein Eingangsglied der Doppelkupplungsanordnung 12 ist mit einer Eingangswelle 16 verbunden, die bspw. mit der Kurbelwelle eines Antriebsmotors wie eines Verbrennungsmotors verbindbar ist.

Die Antriebseinheit 10 dient dazu, Leistung von der Eingangswelle 16 auf eine Ausgangswelle 18 zu übertragen, die in der dargestellten Ausführungsform koaxial zu der Eingangswelle 16 ausgerichtet ist.

Die Doppelkupplungsanordnung 12 weist eine erste Kupplung 20 und eine zweite Kupplung 22 auf. Die Kupplungen 20, 22 sind als nasslaufende Kupplungen, insbesondere als nasslaufende Lamellenkupplungen ausgebildet. Ihre Eingangsglieder sind mit der Eingangswelle 16 verbunden. Ein Ausgangsglied der ersten Kupplung 20 ist mit einer Innenwelle 26 einer koaxialen Wellenanordnung 24 verbunden. Ein Ausgangsglied der zweiten Kupplung 22 ist mit einer Hohlwelle 28 der Wellenanordnung 24 verbunden.

Die zwei Kupplungen 20, 22 sind radial ineinander verschachtelt und sind koaxial zu der Wellenanordnung 24 und zu der Eingangswelle 16 angeordnet. Die erste Kupplung 20 wird hydraulisch betätigt, und zwar durch ein hydraulisches Fluid mit einem ersten Kupplungsdruck P1. Die zweite Kupplung 22 wird ebenfalls hydraulisch betätigt, und zwar mittels eines hydraulischen Fluides mit einem Hydraulikdruck P2.

Die Kupplungsanordnung 12 ist hier nur beispielhaft radial ineinander geschachtelt dargestellt. Es versteht sich, dass die zwei Kupplungen 20, 22 auch parallel bzw. axial hintereinander angeordnet sein können.

Das Getriebe 14 ist als Stufenwechselgetriebe mit einer Mehrzahl von Radsätzen und zugeordneten Schaltkupplungen ausgebildet. In Fig. 1 sind schematisch Radsätze für Gangstufen 1, 2, 3 und 4 dargestellt (die Proportionen der Raddurchmesser sind aus Gründen einer übersichtlichen Darstellung nicht korrekt wiedergegeben). Bei dem Getriebe 14 sind die ungeraden Gangstufen 1, 3 der ersten Kupplung 20 und der Innenwelle 26 zugeordnet. Die geraden Gangstufen 2, 4 sind der zweiten Kupplung 22 und der Hohlwelle 28 zugeordnet.

Es versteht sich, dass die Anzahl der Gangstufen 1-4 lediglich beispielhaft dargestellt ist. Der Antriebsstrang kann genau so gut 5, 6, 7 oder weniger oder mehr Gangstufen aufweisen.

Ferner ist die Antriebseinheit 10 insgesamt aufgrund der koaxialen Anordnung von Eingangswelle 16 und Ausgangswelle 18 für den Längseinbau in einem Fahrzeug ausgelegt. Es versteht sich jedoch, dass die erfindungsgemäßen Prinzipien in gleicher Weise auf Getriebe für den Quereinbau, insbesondere für den Front-Quereinbau anwendbar sind.

Für die Radsätze der Gangstufen 1 und 3 ist ein erstes Schaltkupplungspaket 30 vorgesehen, das an der Innenwelle 26 gelagert ist. Für die Gangstufen 2 und 4 ist ein zweites Schaltkupplungspaket 32 vorgesehen, das an der Hohlwelle 28 gelagert ist.

Parallel zu der Wellenanordnung 24 ist eine Vorgelegewelle 34 vorgesehen. Die Vorgelegewelle 34 steht über einen Abtriebskonstantenradsatz 36 mit der Ausgangswelle 18 in Verbindung.

Die allgemeine Funktionsweise eines Doppelkupplungsgetriebes 10 ist allgemein bekannt und wird daher nicht im Detail beschrieben. Kurz zusammengefasst ist es so, dass Gangwechsel von aufeinander folgenden Gangstufen ohne Zugkrafteinbruch durchgeführt werden können, indem die zwei Kupplungen 20, 22 überschneidend betätigt werden.

Die zwei Kupplungen 20, 22 sind dabei vergleichsweise starken Belastungen ausgesetzt, da, wie gesagt, Gangwechsel teilweise unter Last stattfinden können. Daher sind die Kupplungen 20, 22 bei der vorliegenden Ausführungsform als nasslaufende Lamellenkupplungen ausgeführt. Es kann sich jedoch auch um andere nasslaufende Kupplungstypen handeln.

Ferner sind die zwei Kupplungen 20, 22 hydraulisch betätigt.

Zur Versorgung der zwei Kupplungen 20, 22 mit Fluid, und zwar sowohl zum Zwecke der hydraulischen Betätigung als auch zu Kühl- und/oder Schmierzwecken, ist der Doppelkupplungsanordnung 12 eine Fluidversorgungseinrichtung 40 in Form einer in Fig. 1 schematisch dargestellten Drehdurchführungseinrichtung 40 zugeordnet.

Die Fluidversorgungseinrichtung 40 ist radial innerhalb der Doppelkupplungsanordnung 12 und um die Wellenanordnung 24 herum angeordnet.

Über einen nicht näher bezeichneten Anschluss wird der Fluidversorgungseinrichtung 40 unter Druck stehendes Fluid 42 zugeführt, und zwar in der Regel einem Statorabschnitt der Fluidversorgungseinrichtung 40.

Bei 44 und 46 sind ein erster Kupplungsauslass bzw. ein zweiter Kupplungsauslass 46 gezeigt. Über den ersten Kupplungsauslass 44 wird Fluid mit einem Druck P1 der ersten Kupplung 20 zugeführt. Über den zweiten Kupplungsauslass 46 wird der zweiten Kupplung 22 Fluid 42 mit dem Druck P2 zugeführt.

Die allgemeine Funktionsweise derartiger Fluidversorgungseinrichtungen 40 ist bei Doppelkupplungsanordnungen bekannt. In der Regel ist noch ein weiterer Auslass vorgesehen, der für die notwendige Kühlung und/oder Schmierung sorgt.

Die Kupplungsauslässe 44, 46 gehen von der Fluidversorgungseinrichtung 40 radial nach außen ab. Das zugeführte Fluid 42 wird dabei aufgrund der ausgangsseitigen Drehzahlen der Fluidversorgungseinrichtung 40 mittels Zentrifugalkräften nach außen gedrückt. Es versteht sich, dass in Bezug auf die hydraulische Ansteuerung der zwei Kupplungen 20, 22 ggf. entsprechende Drückausgleichsräume vorgesehen sind, die möglicherweise auch an die Fluidversorgungseinrichtung 40 angeschlossen sein können.

Das zur Kühlung vorgesehene Fluid durchdringt die Kupplungen 20, 22 radial von innen nach außen und sorgt so für eine hinreichende Kühlung (bzw. Schmierung von anderen Bauteilen).

Die Fluidversorgungseinrichtung 40, die radial innerhalb der Doppelkupplungsanordnung 12 vorgesehen ist, wird bei der in Fig. 1 gezeigten Antriebseinheit 10 auch dazu verwendet, um Bauteile des Getriebes 14 zu schmieren bzw. zu kühlen.

Zu diesem Zweck ist ausgehend von der Fluidversorgungseinrichtung 40 ein radial nach innen gerichteter Eingangsradialkanal 50 vorgesehen, der durch die Hohlwelle 28 hindurchgeht und in einem in der Innenwelle 26 vorgesehenen Axialkanal 52 mündet.

Der Axialkanal 52 erstreckt sich im Wesentlichen über die gesamte Länge der Innenwelle 26 und kann bspw. als Kernbohrung ausgebildet sein.

An den Stellen innerhalb des Getriebes 14, an denen eine Schmierung und/oder Kühlung notwendig ist, ist jeweils ein Ausgangsradialkanal 54 (für die erste Schaltkupplung 30) bzw. 56 (für die zweite Schaltkupplung 32) vorgesehen. Im Falle des Ausgangsradialkanals 54 durchsetzt dieser lediglich die Innenwelle 26 und das Öl tritt aufgrund von Fliehkräften radial nach außen aus dem Ausgangsradialkanal 54 aus.

Im Falle des Ausgangsradialkanals 56 durchsetzt dieser auch die Hohlwelle 28 und das Fluid tritt radial nach außen zur Kühlung bzw. Schmierung der zweiten Schaltkupplung 32 aus.

Das über den Axialkanal 52 zugeführte Fluid kann auch zur Kühlung und/oder Schmierung von anderen Bauteilen, insbesondere von Wellen, Lagern etc. verwendet werden.

Ausgehend von der Fluidversorgungseinrichtung 40 wird durch geeignete Abdichtungen ein geschlossener Kreislauf eingerichtet, der nur wenig Pumpwirkung benötigt. Denn das aus den Ausgangsradialkanälen 54, 56 austretende Fluid wird aufgrund von Zentrifugalkräften beschleunigt, und hierdurch wird weiteres Fluid über den Axialkanal 52 "angesaugt", so dass das Fluid 42 nur mit relativ geringem Druck zugeführt werden muss.

Da das Fluid 42 jedoch ausgehend von der Fluidversorgungseinrichtung 40 zunächst radial nach innen gedrückt werden muss, ist es in der Regel sinnvoll, das Fluid 42 unter einem gewissen Mindestdruck, von bspw. 2 bar, zuzuführen, um eine sichere Versorgung der Getriebebauteile mit Fluid zu gewährleisten.

Die Abdichtung des geschlossenen Fluidversorgungskreislaufes für das Getriebe 14 beinhaltet eine erste Dichtungsanordnung 60, die die Fluidversorgungseinrichtung 40 gegenüber dem Außenumfang der Hohlwelle 28 abdichtet. Ferner ist eine zweite Dichtungsanordnung 62 vorgesehen, die die Innenwelle 26 gegenüber der Hohlwelle 28 abdichtet, und zwar im Bereich des Eingangsradialkanals 50.

Eine dritte Dichtungsanordnung 64 ist ebenfalls zwischen der Innenwelle 26 und der Hohlwelle 28 vorgesehen, und zwar um den Ausgangsradialkanal 54 herum, der die Hohlwelle 28 durchsetzt.

Eine vierte Dichtungsanordnung 66 ist im vorliegenden Fall optional vorgesehen, und zwar zur Abdichtung zwischen der Innenwelle 26 und der koaxial darin geführten Ausgangswelle 18.

Anstelle der vierten Dichtungsanordnung kann der Axialkanal 52 jedoch auch als Sackkanal ausgebildet sein.

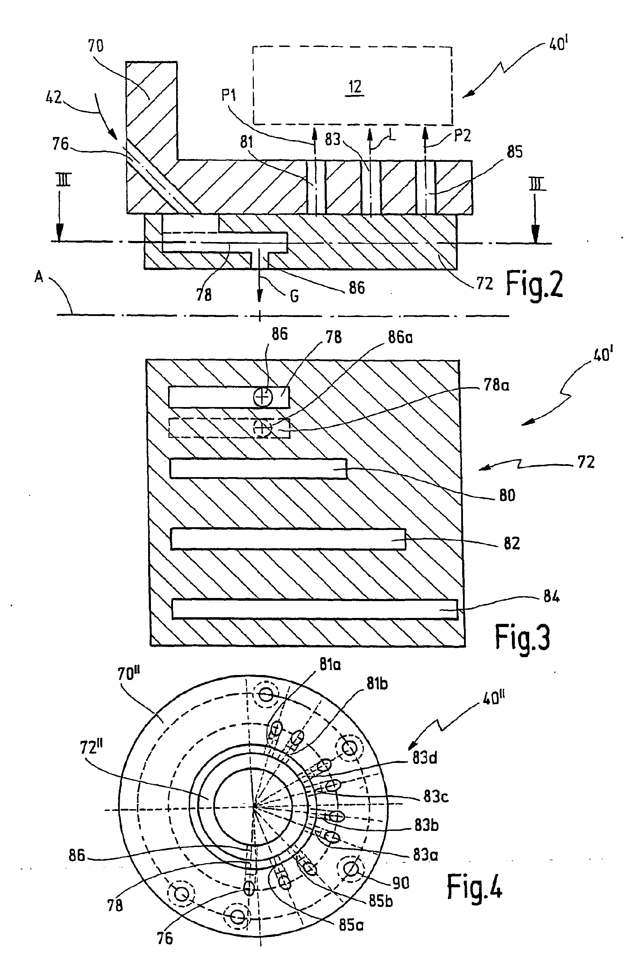

Fig. 2 zeigt eine Fluidversorgungseinrichtung 40', die für die Antriebseinheit 10 der Fig. 1 geeignet ist.

Die Fluidversorgungseinrichtung 40' weist einen Träger bzw. Support 70 auf, der als Stator eingerichtet ist, also gehäusefest in Bezug auf ein Gehäuse der Antriebseinheit 10 gelagert ist.

Der Träger 70 weist an seiner Innenseite einen Verteiler 72 auf, der ebenfalls gehäusefest gelagert ist.

Der Verteiler 72 ist koaxial zu dem Träger 70 angeordnet und kann bspw. in diesen eingepresst sein. Hierdurch kann gleichzeitig eine Abdichtung für das zu übertragende Hydraulikfluid erzielt werden.

Der Träger 70 weist, in Umfangsrichtung verteilt, eine Mehrzahl von Versorgungskanälen auf, von denen in Fig. 2 einer gezeigt und mit 76 bezeichnet ist.

Der Versorgungskanal 76 verläuft von einer axialen Stirnseite des Trägers 70 schräg radial nach innen zum Innenumfang des Trägers 70.

Der Verteiler 72 weist eine Mehrzahl von Längskanälen auf, von denen in Fig. 2 einer mit 78 bezeichnet ist.

Fig. 3 zeigt eine Querschnittsansicht entlang der Linie III-III in Fig. 2, und zwar in einer abgewickelten Darstellung.

Man erkennt, dass in Umfangsrichtung verteilt, und zwar entsprechend zu den Versorgungskanälen 76, die Mehrzahl von Längskanälen vorgesehen ist, die jeweils Fluid führen, und zwar in der Regel mit einem bereits geeignet voreingestellten Druck.

Der erste Längskanal 78 dient zur Versorgung des Getriebes 14, wie nachstehend noch erläutert werden wird.

Ein zweiter Längskanal 80 ist in dem Verteiler 72 vorgesehen zur Verbindung mit einem ersten Radialkanal 81 in dem Träger 70. Der erste Radialkanal 81 führt Fluid mit einem Druck P1 für die Doppelkupplungsanordnung 12.

Ein dritter Längskanal 82 dient in entsprechender Weise zur Verbindung mit einem Radialkanal 83 in dem Träger 70. Über den Radialkanal 83 wird Kühl- bzw. Schmierfluid radial nach außen zu der Doppelkupplungsanordnung 12 geführt, wie es schematisch bei L gezeigt ist.

Ein vierter Längskanal 84 dient zur Verbindung mit einem weiteren Radialkanal 85 in dem Träger 70, über den Fluid mit einem Druck P2 der Doppelkupplungsanordnung 12 zugeführt wird.

Die Radialkanäle 81, 83, 85 führen radial nach außen. Es versteht sich, dass die Fluidversorgungseinrichtung 40' einen radial außenliegenden Rotor (nicht dargestellt) aufweist, der mit der Doppelkupplungsanordnung 12 verbunden ist und somit Teil der Drehdurchführungseinrichtung ist.

Ferner versteht sich, dass die Darstellung mit einem Längskanal 80, 82, 84 und jeweils einem Radialkanal 81, 83, 85 pro Grundfunktion aus Gründen der Übersichtlichkeit erfolgt. Es versteht sich jedoch, dass anstelle bspw. eines Kanales 80 auch mehrere derartiger Längskanäle vorgesehen sein können, mit entsprechender Anzahl von zugeordneten Radialkanälen 81.

Generell soll der Begriff "Kanal" im Rahmen der vorliegenden Anmeldung breit verstanden werden. Ein Kanal kann somit aus einem Einzelkanal oder einer Mehrzahl von Kanälen bestehen.

Zum Zwecke der Versorgung des Getriebes 14 mit Fluid ist an dem Verteiler 72 ein radial nach innen gerichteter Radialkanal 86 vorgesehen, der mit dem Längskanal 78 verbunden ist und einen Teil des Eingangsradialkanals 50 bildet.

Es versteht sich, dass radial innerhalb des Verteilers 72 die Wellenanordnung 24 (drehbar um eine Achse A herum) angeordnet ist, und dass der Radialkanal 86 folglich durch die Hohlwelle 28 hindurch mit dem Axialkanal 52 in der Innenwelle 26 verbunden ist.

In Fig. 3 ist dargestellt, dass, wie oben erwähnt, anstelle nur eines Längskanales 78 auch eine Mehrzahl von Längskanälen 78, 78a vorgesehen sein kann, mit einer entsprechenden Anzahl von Radialkanälen 86, 86a.

Zusammenfassend wird bei der Fluidversorgungseinrichtung 40' Fluid mit dem Druck P1 über einen Versorgungskanal 76, den Längskanal 80 und den Radialkanal 81 zugeführt. Fluid mit dem Druck P2 wird über einen weiteren Versorgungskanal 76, den Längskanal 84 und den Radialkanal 85 zugeführt.

Schmier- bzw. Kühlfluid L wird über einen weiteren Versorgungskanal 76, den Längskanal 80 und den Radialkanal 83 zugeführt.

Fluid zur Versorgung des Getriebes wird über den dargestellten Versorgungskanal 76, den Längskanal 78 und den radial nach innen gerichteten Radialkanal 86 zugeführt.

Fig. 4 zeigt eine weitere alternative Ausführungsform einer Fluidversorgungseinrichtung 40 " . Die Fluidversorgungseinrichtung 40 " entspricht vom generellen Aufbau her der Fluidversorgungseinrichtung 40' der Figuren 2 und 3 und stellt eine Ansicht in axialer Richtung (von links nach rechts in Fig. 2) dar.

Man erkennt den in der Axialansicht kreisrunden Träger 70 " und den radial darin und konzentrisch hierzu angeordneten Verteiler 72" .

Ferner sind über den Umfang verteilt eine Mehrzahl von Versorgungskanälen gezeigt, von denen einer in Fig. 4 mit 76 bezeichnet ist.

Der mit 76 bezeichnete Versorgungskanal ist über den - gestrichelt dargestellten - Längskanal 78 mit dem radial nach innen gerichteten Kanal 86 verbunden.

Ferner ist gezeigt, dass zwei radial nach außen gerichtete Radialkanäle 81a, 81b vorgesehen sind, über die Fluid mit dem Druck P1 bereitgestellt wird.

Entsprechend sind zwei Radialkanäle 85a, 85b vorgesehen, um Fluid mit dem Druck P2 zuzuführen.

Schließlich sind vier Radialkanäle 83a - 83d vorgesehen, um Schmier- bzw. Kühlflüssigkeit zuzuführen.

Man erkennt, dass bei der Fluidversorgungsanordnung 40" pro Grundfunktion der Doppelkupplungsanordnung 12 jeweils mehr als ein Kanal vorgesehen ist, um das Fluid bereitzustellen. Für die Versorgung des Getriebes ist lediglich ein Gesamtkanal vorgesehen.

Die den Radialkanälen zugeordneten Axialkanäle können in entsprechender Weise separate Einzelkanäle sein, können aber auch zu Verteilerkanälen zusammengefasst sein, die dann breiter sind als die einzelnen Radialkanäle.

## Patentansprüche

1. Doppelkupplungsgetriebe (10) mit einer Doppelkupplungsanordnung (12) und einem Getriebe (14), das über eine Wellenanordnung (24) mit der Doppelkupplungsanordnung (12) verbunden ist, wobei radial innerhalb der Doppelkupplungsanordnung (12) und um die Wellenanordnung (24) herum eine Fluidversorgungseinrichtung (40) angeordnet ist, um die Doppelkupplungsanordnung (12) mit Fluid zu versorgen, wobei die Wellenanordnung (24) eine Innenwelle (26) und eine Hohlwelle (28) aufweist und sich in das Getriebe (14) hinein erstreckt und wobei das Getriebe (14) entlang der Wellenanordnung eine Mehrzahl von Getriebebauteilen (30, 32) aufweist, die zum Zwecke der Schmierung und/oder Kühlung mit Fluid versorgt werden,
**dadurch gekennzeichnet, dass**
von der Fluidversorgungseinrichtung (40) ein Eingangsradialkanal (50) in das Innere der Wellenanordnung (24) führt, dass sich in dem Inneren der Wellenanordnung (24) ein Axialkanal (52) erstreckt, und dass im Inneren des Getriebes (14) wenigstens ein Ausgangsradialkanal (54, 56) von dem Axialkanal (52) zu den Getriebebauteilen (30, 32) führt, um diese mit Fluid zu versorgen.

2. Doppelkupplungsgetriebe nach Anspruch 1, **dadurch gekennzeichnet, dass** die Fluidversorgungseinrichtung (40) eine Drehdurchführungseinrichtung (40) aufweist.

3. Doppelkupplungsgetriebe nach Anspruch 1 oder 2, **dadurch gekennzeichnet, dass** der Eingangsradialkanal (50) und der Axialkanal (52) gegenüber der Umgebung abgedichtet sind.

4. Doppelkupplungsgetriebe nach einem der Ansprüche 1 - 3, **dadurch gekennzeichnet, dass** der Eingangsradialkanal (50) eine Mehrzahl von über den Umfang verteilten radialen Bohrungen (86, 86a) in der Wellenanordnung (24) aufweist.

5. Doppelkupplungsgetriebe nach einem der Ansprüche 1 - 4, **dadurch gekennzeichnet, dass** der Ausgangsradialkanal (54, 56) eine Mehrzahl von über den Umfang verteilten radialen Bohrungen in der Wellenanordnung (24) aufweist.

6. Doppelkupplungsgetriebe nach einem der Ansprüche 1 - 5, **dadurch gekennzeichnet, dass** der Axialkanal (52) in der Innenwelle (26) ausgebildet ist.

7. Doppelkupplungsgetriebe nach Anspruch 6, **dadurch gekennzeichnet, dass** der Axialkanal (52) eine Kernbohrung in der Innenwelle (26) aufweist.

8. Doppelkupplungsgetriebe nach einem der Ansprüche 1 - 7, **dadurch gekennzeichnet, dass** der Eingangsradialkanal (50) sich durch die Hohlwelle (28) hindurch zu der Innenwelle (26) erstreckt.

## Claims

1. A dual clutch transmission (10) comprising a dual clutch arrangement (12) and a transmission (14), which is connected to the dual clutch arrangement (12) by way of a shaft arrangement (24), wherein a fluid supply device (40) is arranged radially inside the dual clutch arrangement (12) and around the shaft arrangement (24) in order to supply the dual clutch arrangement (12) with fluid, the shaft arrangement (24) having an inner shaft (26) and a hollow shaft (28) and extending into the transmission (14), and wherein the transmission (14) comprises a plurality of transmission components (30, 32) along the shaft arrangement, said components being supplied with fluid for lubrication and/or cooling purposes,
**characterized in that**
a radial inlet duct (50) leads from the fluid supply device (40) into the interior of the shaft arrangement (24), that an axial duct (52) extends inside the shaft arrangement (24), and that inside the transmission (14) at least one radial outlet duct (54, 56) leads from the axial duct (52) to the transmission components (30, 32) in order to supply these with fluid.

2. The dual clutch transmission as claimed in claim 1, **characterized in that** the fluid supply device (40) comprises a rotary ducting device (40).

3. The dual clutch transmission as claimed in claim 1 or 2, **characterized in that** the radial inlet duct (50) and the axial duct (52) are sealed off from the environment.

4. The dual clutch transmission as claimed in any one of claims 1 to 3, **characterized in that** the radial inlet duct (50) has a plurality of circumferentially spaced radial bores (86, 86a) in the shaft arrangement (24).

5. The dual clutch transmission as claimed in any one of claims 1 to 4, **characterized in that** the radial outlet duct (54, 56) comprises a plurality of circumferentially spaced radial bores in the shaft arrangement (24).

6. The dual clutch transmission as claimed in any one of claims 1 to 5, **characterized in that** the axial duct (52) is formed in the inner shaft (26).

7. The dual clutch transmission as claimed in claim 6, **characterized in that** the axial duct (52) comprises a bore in the core of the inner shaft (26).

8. The dual clutch transmission as claimed in any one of claims 1 to 7, **characterized in that** the radial inlet duct (50) extends through the hollow shaft (28) to the inner shaft (26).

## Revendications

1. Boîte de vitesses à double embrayage (10), avec un ensemble d'embrayage double (12) et avec une boîte de vitesses (14) qui est reliée à l'ensemble d'embrayage double (12) par l'intermédiaire d'un ensemble d'arbres (24), sachant qu'un dispositif d'alimentation en fluide (40) est disposé radialement à l'intérieur de l'ensemble d'embrayage double (12) et tout autour de l'ensemble d'arbres (24), afin d'alimenter en fluide l'ensemble d'embrayage double (12), sachant que l'ensemble d'arbres (24) présente un arbre intérieur (26) et un arbre creux (28) et s'étend à l'intérieur de la boîte de vitesses (14), et sachant que la boîte de vitesses (14) présente, le long de l'ensemble d'arbres, une pluralité de composants de boîte de vitesses (30, 32) qui sont alimentés en fluide à des fins de lubrification et/ou de refroidissement,
**caractérisée en ce qu'**un canal radial d'entrée (50) mène du dispositif d'alimentation en fluide (40) à l'intérieur de l'ensemble d'arbres (24), **en ce qu'**un canal axial (52) s'étend à l'intérieur de l'ensemble d'arbres (24), et **en ce qu'**au moins un canal radial de sortie (54, 56) mène, à l'intérieur de la boîte de vitesses (14), du canal axial (52) aux composants de boîte de vitesses (30, 32), afin d'alimenter ceux-ci en fluide.

2. Boîte de vitesses à double embrayage selon la revendication 1, **caractérisée en ce que** le dispositif d'alimentation en fluide (40) présente un dispositif de passage tournant (40).

3. Boîte de vitesses à double embrayage selon la revendication 1 ou 2,
**caractérisée en ce que** le canal radial d'entrée (50) et le canal axial (52) sont étanchés vis-à-vis de l'environnement.

4. Boîte de vitesses à double embrayage selon l'une des revendications 1 à 3,
**caractérisée en ce que** le canal radial d'entrée (50) présente, dans l'ensemble d'arbres (24), une pluralité de perçages radiaux (86, 86a) répartis sur la circonférence.

5. Boîte de vitesses à double embrayage selon l'une des revendications 1 à 4,
**caractérisée en ce que** le canal radial de sortie (54, 56) présente, dans l'ensemble d'arbres (24), une pluralité de perçages radiaux répartis sur la circonférence.

6. Boîte de vitesses à double embrayage selon l'une des revendications 1 à 5,
**caractérisée en ce que** le canal axial (52) est configuré dans l'arbre intérieur (26).

7. Boîte de vitesses à double embrayage selon la revendication 6, **caractérisée en ce que** le canal axial (52) présente un perçage central dans l'arbre intérieur (26).

8. Boîte de vitesses à double embrayage selon l'une des revendications 1 à 7,
**caractérisée en ce que** le canal radial d'entrée (50) s'étend vers l'arbre intérieur (26) en traversant l'arbre creux (28).
